# EUROPEAN PATENT APPLICATION

(11) **EP 2 733 431 A2**
(43) Date of publication of application: **21.05.2014**
(21) Application number: 13192303.9
(22) Date of filing: 11.11.2013
(51) Int. Cl.: F24F 1/01, F24F 11/00

(54) **Air conditioning system**

(30) Priority: 12.11.2012 KR 20120127471
(71) Applicant: LG Electronics, Inc., Seoul 150-721 (KR)
(72) Inventor: Kim, Seontaek, 641-110 Changwon-si (KR); Shin, Seongjin, 641-110 Changwon-si (KR); Kim, Nakhoon, 641-110 Changwon-si (KR); Kim, Byungsoon, 641-110 Changwon-si (KR)
(74) Representative: Vossius & Partner

(57) **Abstract**

The present invention relates to an air conditioning system including a control apparatus which can access to an air conditioner easily for determining and controlling an operation state of the air conditioner visually.

The air conditioning system stores and manages data received from the air conditioner, and displays visually, to display a change of the operation state of the air conditioner with a time flow, enabling the user to determine a state of the air conditioner easily to recognize a trouble of the air conditioner instantly and to determine a flow on a whole structure and general operation of the air conditioner easily, thereby permitting to have an advantage of improving user's convenience, significantly. (Fig.1)

## Description

This application claims the priority benefit of Korean Patent Application No. 10-2012-0127471, filed on November 12, 2012 in the Korean Intellectual Property Office, the disclosure of which is incorporated herein by reference.

The present invention relates to an air conditioning system. More specifically, the present invention relates to an air conditioning system which controls and monitors an air conditioner and displays an operation state of the air conditioner, visually.

In general, the control apparatus controls a domestic appliance, such as TV, video, audio, air conditioner, cable broadcasting converter, a satellite broadcasting converter, and fan. Depending on cases, the control apparatus may control various domestic appliances by wireless transmission of a control frequency or cable communication, remotely. The control apparatus may be a specialized apparatus to a particular domestic appliance, or a computer having software loaded thereon for controlling a particular domestic appliance.

The control apparatus may be applied to the air conditioner. A multi-type air conditioner used in a large sized building which requires a plurality of indoor units, such as a building, has one outdoor unit connected to the plurality of indoor units. As the indoor units are installed in respective rooms for air conditioning of the rooms, an effect may be obtained, in which a plurality of air conditioners are installed to the building.

In general, though the multi-type air conditioner is provided with a central control unit configured to control and monitor a state of the air conditioner in a position of a user to enable to monitor a temperature, an operation mode, and whether the air conditioner has something wrong or not, if the air conditioner has something wrong, a state of the air conditioner having something wrong is required to be inspected based, not on a simple state data, but on various data on each unit of the air conditioner for proper inspection of the state.

Even though an apparatus, which accesses and inspects one of the units of the air conditioners for carrying out the proper inspection of the state, shows data on each of the units one by one, since an amount of the data is massive, there has been a problem in that it is difficult to forward the data effectively and to grasp a state of the data, easily.

Accordingly, the present invention has been made in an effort to solve the aforementioned problems, and it is an object of the present invention to provide an air conditioning system which can access to an air conditioner easily for determining and controlling an operation state of the air conditioner visually.

To achieve the object of the present invention, an air conditioning system includes a plurality of equipped apparatuses connected to one another to form a network, and a control apparatus connected to one of the plurality of equipped apparatuses for monitoring and controlling the plurality of equipped apparatuses, wherein the control apparatus receives a detailed cycle data which enables trouble diagnosis on the plurality of equipped apparatuses from the apparatus connected thereto thus in real time, and displays the cycle data on the plurality of equipped apparatuses on a frame in real time, and carrying out control for determining whether the plurality of equipped apparatuses have something wrong taken place thereto and or not, and a position of the trouble, and determining the trouble on the plurality of equipped apparatuses according to the cycle data changed.

The air conditioning system including an air conditioner stores and manages data received from the air conditioner, and displays visually, to display a change of the operation state of the air conditioner with a time flow, enabling the user to determine a state of the air conditioner easily to recognize a trouble of the air conditioner instantly and to determine a flow on a whole structure and general operation of the air conditioner easily, thereby permitting to have an advantage of improving user's convenience, significantly.
FIGS. 1 to 3 are schematic views each illustrating an air conditioner system including a control apparatus in accordance with a preferred embodiment of the present invention;
FIG. 4 is schematic view illustrating data flows between a control unit in accordance with a preferred embodiment of the present invention and a unit of an air conditioner;
FIG. 5 is a block diagram illustrating a control unit in accordance with a preferred embodiment of the present invention;
FIG. 6 is an exemplary view illustrating a frame for monitoring an air conditioner displayed on a control unit in accordance with a preferred embodiment of the present invention;
FIG. 7 is an exemplary view illustrating a cycle frame of an air conditioner displayed on a control unit in accordance with a preferred embodiment of the present invention;
FIG. 8 is an exemplary diagram illustrating an indoor unit control frame displayed on a control unit in accordance with a preferred embodiment of the present invention;
FIGS. 9A, 9B and 9C are exemplary diagrams illustrating frames of operation for a control unit in accordance with a preferred embodiment of the present invention, to generate a test report;
FIGS. 10A, and 10B are exemplary diagrams illustrating frames of operation for storing a data in a control unit in accordance with a preferred embodiment of the present invention.
FIG. 11 is an exemplary diagram illustrating a control unit in accordance with a preferred embodiment of the present invention displaying a data.

The advantages, features, and methods for achieving those will become apparent upon referring to embodiments described later in detail together with the attached drawings. However, the present invention is not limited to the embodiments disclosed hereinafter, but may be embodied in different modes, the embodiments are provided for making disclosure of the present invention perfect and notifying a scope of the present invention to persons skilled in this field of art completely, and the present invention will be defined only by scope of claims. Wherever possible, the same reference numbers will be used throughout the drawings to refer to the same or like parts.

An apparatus for controlling an air conditioner in accordance with a preferred embodiment of the present invention will be described with reference to the attached drawings, in detail.

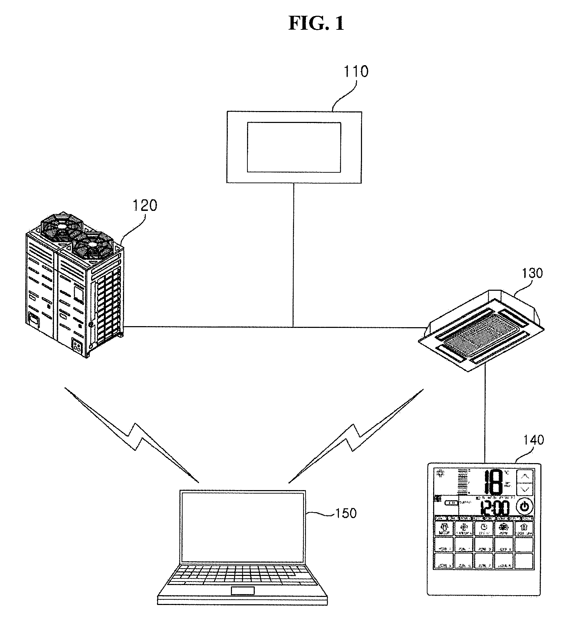

FIGS. 1 to 3 are schematic views each illustrating an air conditioner system including a control apparatus in accordance with a preferred embodiment of the present invention.

Referring to FIG. 1, the air conditioner system in accordance with a preferred embodiment of the present invention includes an indoor unit 130, an outdoor unit 120, a central controller 110, a remote controller 140, and a control unit 150.

And, besides the indoor unit, and the outdoor unit, the air conditioner system also includes a ventilating unit, a defrosting unit, a humidifying unit, a heater, and a showcase.

The control unit 150 may be a microcomputer including software connected to the indoor unit 130 or the outdoor unit 120 with or without wire for controlling the indoor unit 130 or the outdoor unit 120.

The remote controller 140 is connected to the indoor unit 130 or the outdoor unit 120 with, not limited to, wire for transmission of a control signal, but the remote controller 140 may also communicate with the indoor unit 130 or the outdoor unit 120 without wire.

The central controller 110 is connected to the indoor unit 130 and the outdoor unit 120 to transmit/receive data thereto/therefrom for monitoring and controlling operation thereof. The central controller 110 includes input means for inputting an order thereto, and output means for displaying control data or information.

The input means of the central controller 110 may include an input unit, such as a mechanical button, or a touch pad for sensing touch input in a broad sense. The output means of the central controller 110 may include a unit which generates a light, including a light source (A unit which emits a light, such as LED: Light Emitting Diode, OLED: Organic Light Emitting Diode, or so on).

The central controller 110 may include a microprocessor which is able to process information, and transmits/receives a control signal in connection to information processing. As shown in FIG. 1, the central controller 110 may be connected to the indoor unit 130 and the outdoor unit 120, and may communicate with the indoor unit 130 and the outdoor unit 120 with or without wire, but not limited to this.

The central controller 110 may control the indoor unit 130 and the outdoor unit 120 individually, and the central controller 110 may control control of the indoor unit 130. For an example, in order to control control of the indoor unit 130, the central controller 110 may make a central control locking for cutting off operation of the remote controller 140 which controls each of the plurality of indoor units 130. In a case of the central control locking of the multi air conditioner system, the central controller 110 may transmit a signal which limits input to the remote controller 140 which controls each of the indoor units 130 to the remote controller 140, the indoor unit 130 or the outdoor unit 120.

The air conditioner, being a room cooling/heating system which cools the room or heats the room by operation opposite to the room cooling by using repetitive operation of drawing warm air from the room, heat exchanging the warm air drawn thus with low temperature refrigerant, and discharging the air heat exchanged thus to the room, is an apparatus which forms a series of cycles with a compressor-a condenser-an expansion valve-an evaporator.

The air conditioner is divided into the outdoor unit 120 installed outdoor mostly, and the indoor unit 130 installed indoor mostly, wherein the outdoor unit 120 may have the condenser and the compressor mounted thereto, and the indoor unit 130 may have the evaporator mounted thereto. The outdoor unit 120 and the indoor unit 130 may be connected to the central controller 110 for receiving a control signal. The plurality of indoor units 130 may be individually connected to the control unit 150 for receiving the control signal to make operation corresponding thereto.

If data information is requested from the control unit 150, the outdoor unit 120 may transmit the data information requested thus. Depending on contents of the request from the control unit 150, contents of the data information to be transmitted may vary. For an example, the outdoor unit 120 may vary the data information to be transmitted with a requested time, but not limited only thereto.

The outdoor unit 120 may include a storage medium (Not shown) for storing the data information.

The outdoor unit 120 may store the data information including operation states periodically. In this case, the outdoor unit 120 may receive a storage period, or a storage time period for storing the data information from the control unit 150. If an error takes place, the outdoor unit 120 may extend the storage time period of the data information stored recently. For an example, if the error takes place, the outdoor unit 120 may store the data information stored recently separate from other information.

The storage medium (Not shown) may include, but not limited to, EEP-ROM (Electronically Erasable and Programmable Read Only Memory).

The indoor unit 130 may communicate with the control unit 150 with or without wire. The indoor unit 130 may include a communication module for communication with the control unit 150 with or without wire.

If the data information is requested from the control unit 150, the indoor unit 130 transmits the data information requested thus. The indoor unit 130 may vary contents of the data information to be transmitted thus with contents of the request from the control unit 150. For an example, the indoor unit 130 may vary the data information to be transmitted thus with a time the control unit 150 requests.

The indoor unit 130 receives the control signal from the control unit 150. If the control signal is received from the control unit 150, the indoor unit 130 may report completion of reception of the control signal to the control unit 150, but this is not limited to, and this may vary with a communication system the air conditioning system employs.

Upon reception of the control signal, the indoor unit 130 may carry out operation corresponding thereto. The indoor unit 130 may receive a storage period, or a storage time period for storing a data signal including an operation state from the control unit 150. The indoor unit 130 may store the data information periodically, or if an error takes place.

If the error takes place, the indoor unit 130 may extend a storage time period of the data information stored recently. The indoor unit 130 may include a storage medium (Not shown) for storage of the data information. The storage medium may include, but not limited to, EEP-ROM (Electronically Erasable and Programmable Read Only Memory).

For an example, the indoor unit 130 may store the data information periodically, and, if the error takes place, the indoor unit 130 may store the data information stored recently separate from other information, but not limited to this.

The data information may include the operation state of the indoor unit 130 or the outdoor unit 120. For an example, though the data information may include, but not limited to, an air temperature, a condensing temperature, an evaporation temperature, a discharge temperature, a heat exchanger temperature, and so on, the data information may include information related to operation of the indoor unit 130 or the outdoor unit 120, in a broad sense.

The indoor unit 130 may transmit the data information including the operation state to the control unit 150. Whether the indoor unit 130 is turned on or off of the indoor unit 130, if the operation state of the indoor unit 130 changes, or if the error takes place, the indoor unit 130 may transmit those to the control unit 150. If an event takes place, or at fixed intervals, the indoor unit 130 may communicate with the control unit 150.

The remote controller 140 may control the indoor unit 130 with or without wire. The operation of the remote controller 140 may be limited by the central controller 110. The remote controller 140 may control the operation state of the indoor unit 130. The indoor unit 130 may control one or the plurality of indoor units 130, but not limited to this.

The air conditioner system may include the control unit 150. The control unit 150 may control the indoor unit 130 and the outdoor unit 120. The control unit 150 may change an operation mode of the indoor unit 130. The operation mode may include modes of room cooling, dehumidifying, air cleaning, or room heating.

In this case, the control unit 150 receives detailed cycle data in real time which enables trouble diagnosis on the air conditioner from the air conditioner and displays the cycle data on a screen.

The control unit 150 may display the data information received from the indoor unit 130, the outdoor unit 120, or other control unit (Not shown). The control unit 150 may display the data information in various modes. For an example, the control unit 150 may display the data information in a mode of setting forth numerical values, or displaying the operation state of an object to be controlled in a time series of images, or a graph.

If there is an input intended for determining the operation state of a domestic appliance the control unit 150 is to control, the control unit 150 may transmit a signal for requesting the data information to the domestic appliance. The control unit 150 may select the outdoor unit 120 or the indoor unit 130 of which data information is intended to be determined.

If the data information is displayed in characters, such as numerals, the control unit 150 may display the data information on the indoor unit 130, the data information on the outdoor unit 120, and valve information on a pipeline which connects the indoor unit 130 to the outdoor unit 120.

Depending on embodiments, if the valve information is displayed, the control unit 150 may display opened or closed valve in colors or with graphics. For an example, though the control unit 150 may display an opened valve in blue, a closed valve in gray, or display forms of the opened valve and the closed valve with graphics, kinds of colors or graphics are not limited to above.

If it is intended to display the data information with a graph, the control unit 150 may select a data value intended to determine with the graph. For an example, the control unit 150 may display a plurality of operation information taps on a top side of a region where the graph is displayed, if any one of the plurality of operation information taps is selected, a data value matched to the operation information tap selected thus may be display in the graph. For an example, the plurality of operation information taps may be matched to a pressure of the outdoor unit 120 or the indoor unit 130, a temperature of the outdoor unit 120 or the indoor unit 130, a discharge pressure from the compressor, an EEV opening, and a fan speed, respectively.

If the data information is displayed in time series images, the control unit 150 may select the outdoor unit 120 or the indoor unit 130 intended to display. If the control unit 150 selects one of the plurality of the outdoor units 120 intended to display, the control unit 150 may select one of the indoor units 130 to be determined from more than one of the indoor units 130 connected to the outdoor unit 120 selected thus.

If the outdoor unit 120 and the indoor unit 130 are selected, the control unit 150 may receive the data information including the operation state of the indoor unit 130 selected thus and a connection state of the outdoor unit 120 selected thus and the indoor unit 130 selected thus. The connection state may include, but not limited to, a pipeline connection state, a flow in the pipeline, on/off of a valve, and so on.

The control unit 150 may display the operation state of the outdoor unit 120 and the indoor unit 130 selected thus in a time series, such as changes of a picture or changes of a color. The control unit 150 may display a state of the pipeline which connects the outdoor unit 120 and the indoor unit 130 selected thus or a state of the valve.

The control unit 150 may display the state of the pipeline which connects the outdoor unit 120 and the indoor unit 130 selected thus with the change of a color according to whether there is a flow in the pipeline or not, or according to a flow direction. The control unit 150 may display turn on/off of the valve mounted to the pipeline connected between the outdoor unit 120 and the indoor unit 130 with the picture.

The control unit 150 may determine the operation state of the indoor unit 130 or the outdoor unit 120 in real time. If the control unit 150 determines the operation state of the indoor unit 130 or the outdoor unit 120 in real time, the control unit 150 may receive the data information and display the data information received thus in real time.

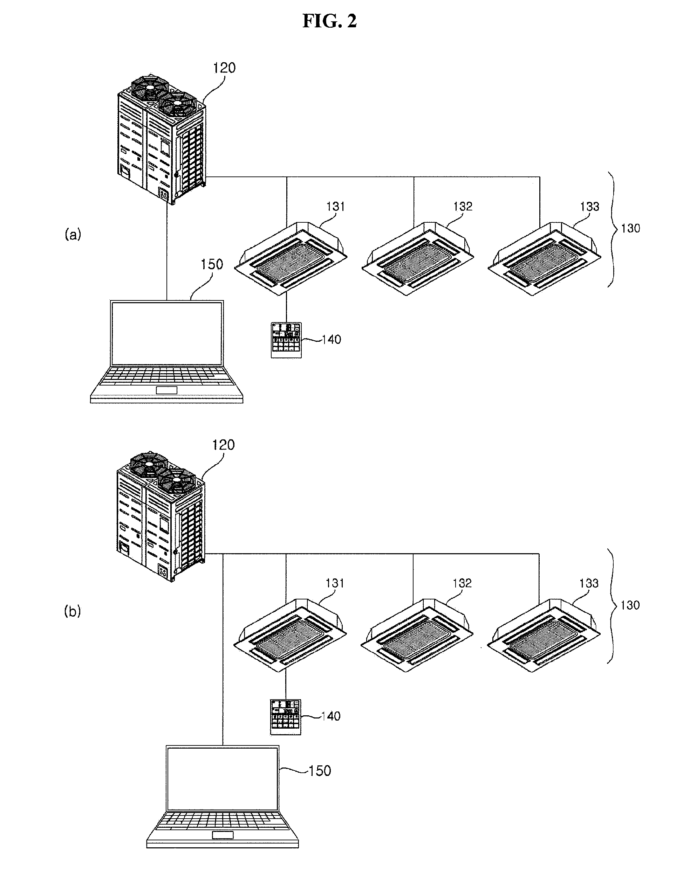

Referring to FIG. 2, a connected position of the control unit 150 may be changed.

Referring to FIG. 2A, the control unit 150 may be connected to the outdoor unit 120. If connected to the outdoor unit 120, the control unit 150 may receive data stored at the outdoor unit to determine a state of the air conditioner. In this case, all data may be received through the outdoor unit.

And, referring to FIG. 2B, the control unit 150 may be connected to a communication line connected among the plurality of indoor units 131 to 133, 130, and, depending on cases, may be connected to the indoor unit.

The control unit 150 having the communication line of the indoor units connected thereto may receive, not only the data stored at a particular unit, but also the data transmitted/received among the units through the communication line. For an example, since the control unit 150 may receive and display the data transmitted/received between the indoor unit 130 and the central controller 110, the control unit 150 may also receive and display a control flow by the central controller 110.

In this case, depending on modes of connection of the control unit 150, i.e., depending on connection of the control unit 150 to the outdoor unit or the communication line of the indoor unit, the data the control unit 150 receives and displays may be vary.

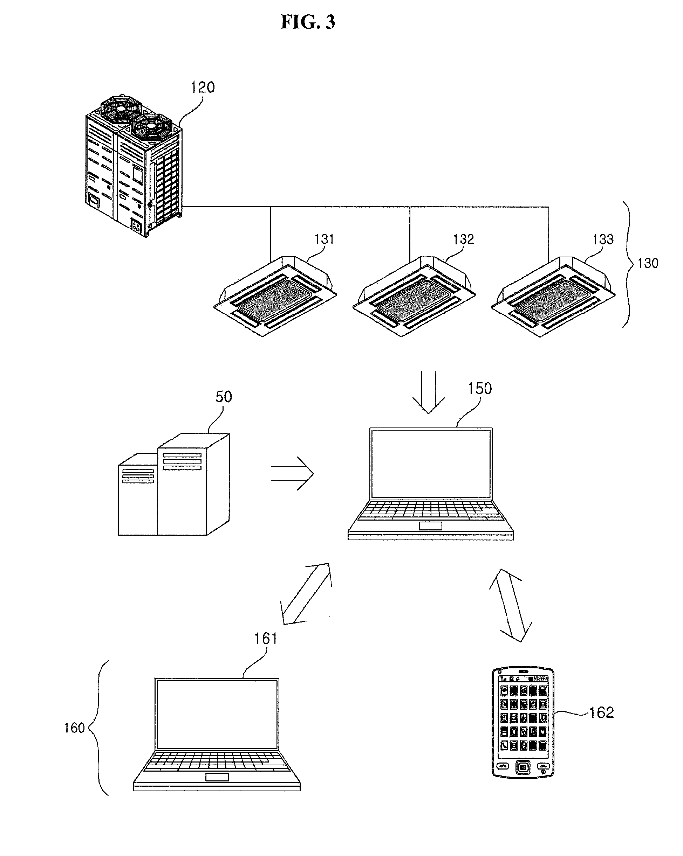

Referring to FIG. 3, the air conditioner system may include a plurality of control units 150 and 160.

As described before, the first control unit 150 is connected to the air conditioner for collecting the data, and the second control unit 161 and 162, 160 makes mutual communication with the first control unit 150 for receiving information on the air conditioner. A plurality of the control units 150 and 160 may transmit/receive information in a variety of communication systems, and may display the data information in languages different from one another.

And, the first control unit 150 may store and accumulate the data received as the first control unit 150 accesses to a separate data server 50, or may request the data if necessary.

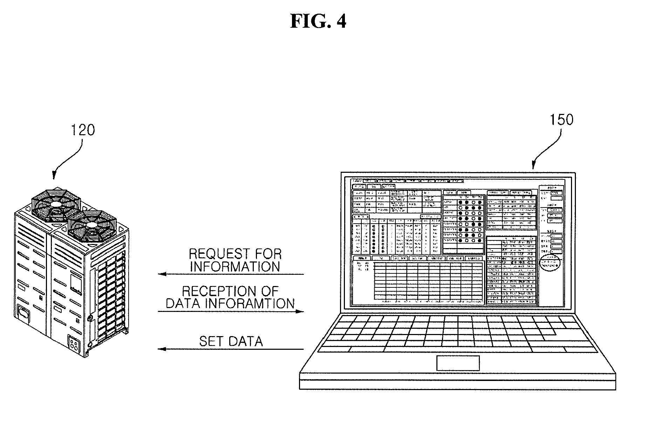

FIG. 4 is schematic view illustrating data flows between a control unit in accordance with a preferred embodiment of the present invention and a unit of an air conditioner.

Referring to FIG. 4, the control unit 150 may be connected to the outdoor unit for requesting the data, and the outdoor unit may transmit the information data on the air conditioner to the control unit 150 as requested.

In this case, as described before, the control unit 150 may be connected to the communication line of the indoor unit, and may receive the control signal between the indoor unit and the central controller to collect information on the air conditioner.

When the data information is requested from the control unit 150, though the indoor unit 120 or the outdoor unit 130 may transmit the data information to the control unit 150, the data transmission is not limited to this, and the data information may be transmitted to the indoor unit 120 or the outdoor unit 130 at particular periods.

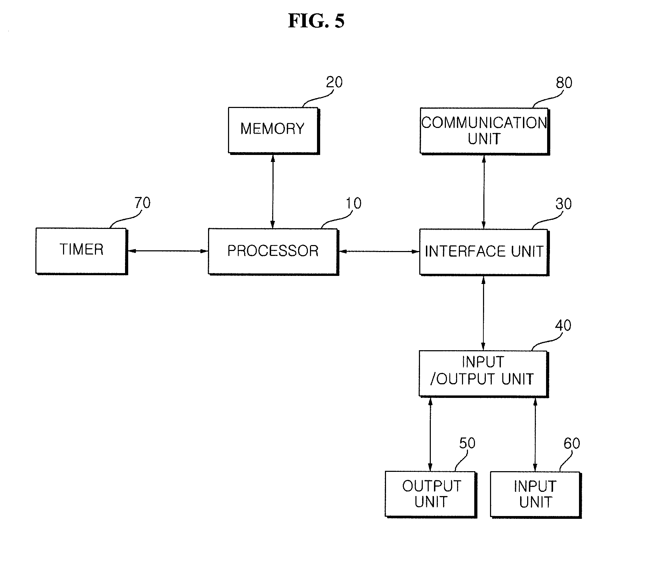

FIG. 5 is a block diagram illustrating a control unit in accordance with a preferred embodiment of the present invention.

Referring to FIG. 5, the control unit 150 includes a processor 10 for processing various signals and carrying out calculation, a memory 20 for storing programs and data in association with the processor 10, and an interface unit 30 for connecting peripheral units related to input or output to/from the processor 10.

And, the control unit 150 also includes a timer 70, a communication unit 80, and an input/output unit 40, an output unit 50, and an input unit 60.

The processor 10 may carry out different functions for the control unit 150, and may run or carry out different software programs and/or sets of command languages stored in the memory 20 for processing the data. The processor 10 may process the signal based on information stored in the memory 20.

For an example, the processor 10 may display the data stored in the memory 20 on the output unit 50, or may carry out the program stored in the memory 20. The processor 10 may carry out the program by calculating a time in association to the timer 70.

The memory 20 may include at least one magnetic disk storage unit, a flash memory unit, or other non-volatile memory, such as a non-volatile solid memory unit, but not limited to this, and may include readable storage medium.

For an example, the memory 20 may include, but not limited to, EEP-ROM (Electronically Erasable and Programmable Read Only Memory). The EEP-ROM may have information written or erased by the processor 10 during operation of the processor 10. The EEP-ROM may be a memory device which maintains information memorized therein without being erased even if power to the control unit 150 is turned off to cut off power supply.

The memory 20 stores different programs and data stored therein in association with the processor 10. The programs the memory 20 has stored therein are run by the processor.

If there is an input to the input unit 60 intending to determine the operation state of the domestic appliance the control unit 150 controls, the processor 10 makes the communication unit 80 to receive the data information which is the operation information of the domestic appliance and to display the data received/transmitted thus. In this case, the data being displayed on a screen may be displayed in time series images or characters.

And, if one of the outdoor unit to be inspected is selected through the input unit 60, the processor 10 may receive the data information from the outdoor unit selected thus, and may include an interface which one of the indoor units which will receive the information may select among one or more than one of the outdoor units connected to the outdoor unit selected thus. In this case, the information may include the operation state of the indoor units selected thus and connection states of the outdoor unit selected thus and the indoor unit selected thus.

The processor 10 may receive information, and may display the operation states of the outdoor unit selected thus and the indoor unit selected thus, and the connection states thereof. And, the processor 10 may receive information on the outdoor unit or the indoor unit in real time, and may display the information in images or characters in real time through the output unit 50.

In this case, the processor 10 display the data received thus in a set language. In this case, this processor 10 may display in a language other than a language stored therein.

The processor 10 sets a data storage time period or storage period of the outdoor unit or the indoor unit and transmits the same to the outdoor unit and the indoor unit. The indoor unit and the outdoor unit store the data according to setting, and erase the data in an order a length of a storage time if the time period is passed.

In displaying the information on the outdoor unit and the indoor unit, the processor 10 displays data in a real time or changes of the data in an order of times in succession if the data are ones produced before a fixed time. In this case, the processor may display elements of the indoor unit or the outdoor unit, for an example, the valve, pressure and temperature of the pipeline, and states of the heat exchanger and the compressor in images or moving images, and depending on cases, the operation state in different colors.

For an example, a fan operation state of the indoor unit may be displayed in a rotating image of rotation blades, and a rotation speed of the fan may be displayed in a numerical value or a color. And, if the pipeline has a flow of a fluid therein, the flow may be displayed divided into a blue color and a red color depending on a temperature thereof, and valve on/off may be displayed in a valve form and a color change through the output unit 50.

If the processor 10 is to display the data received thus, the processor 10 may display the data re-producing the data according to the time, while controlling a display speed thereof. That is, in displaying changes of the information with time, the display speed is controlled according to pass of time.

The interface unit 30 connects the input and output peripheral units to the processor 10 and the memory 20.

In this case, the processor 10, the memory 20, or the interface unit 30 may be embodied on single chip, but not limited to this, and may be embodied on individual chips.

The timer 70 checks time. The processor 10 may determine whether a predetermined time is passed or not by using the timer 70 for carrying out a control. For an example, the timer 70 may calculate a re-producing rate of the images, but not limited to this, and there may be different embodiments.

The input/output unit 40 connects the peripheral units, such as the output unit 50 and the input unit 60, to the interface unit 30 for relaying and controlling input/output of the data. Depending on cases, the input/output unit 40 may include an input/output controller (Not shown) for controlling the output unit 50 or the input unit 60.

The output unit 50 may include a speaker which emits sound, or a display unit which emits a light to make a visual display. The input unit 60 may include means which can receive an external input, such as a physical button, a dial, a slider switch, a click wheel, and so on.

The output unit 50 may include at least one of LPD (Light Emitting Polymer Display), LCD (Liquid Crystal Display), TFT-LCD (Thin Film Transistor-Liquid Crystal Display), OLED (Organic Light-emitting Diode), flexible display), and 3D display, but not limited to those, and may include a variety of systems.

The output unit 50 may display information for controlling an object the control unit 150 is connected thereto. If the control unit 150 is applied to the air conditioner system, the output unit 50 may display information required for air conditioning.

For an example, the output unit 50 may display operation modes of the air conditioner, such as room cooling, room heating, dehumidifying, or air cleaning of the air conditioner, and may display a room temperature, a wind direction, and presence of a heat source in the room.

The output unit 50 may be a touch sensing touch screen. In this case, the output unit 50 may be fabricated as one unit with the input unit. The touch sensing touch screen may display a visual output to a user, and may receive input from the user by sensing a touch. The visual output may include graphics, a text, an icon, a video, and a combination of above. If the output unit 50 includes the touch sensing touch screen, buttons on the input unit 60 described below may be replaced with user interfaces displayed on the touch screen.

The input unit 60 may include at least one button, or a switch, and depending on cases, may include a touch pad which perceives an input with a pressure or static electricity.

The input unit 60 and the output unit 50 may be controlled by the input/output controller (Not shown) in the input/output unit 40.

The input unit 60 and the output unit 50 may include a plurality of interfaces matched to instruction words for carrying out the programs stored in the memory 20, or functions described before.

The communication unit 80 is connected to the indoor unit 130, the outdoor unit 120, and the interface unit 30 for receiving a control signal from the interface unit 30 and transmitting the control signal to the indoor unit 130 or the outdoor unit 120, and receiving the operation states from the indoor unit 130 or the outdoor unit 120.

If the communication unit 80 communicates with the indoor unit 130 or the outdoor unit 120 without wire, the communication unit 80 may include an RF (Radio

Frequency) circuit. The communication unit 80 may transmit/receive the RF signal which is an electro-magnetic signal. The RF circuit converts an electric signal and the electro-magnetic signal to the other, and may communicate with a communication network and other communication units with the electro-magnetic signal.

For an example, the RF circuit may include an antenna system, an RF transceiver, at least one amplifier, a tuner, at least one oscillator, a digital signal processor, a CODEC chip set, and a memory, but not limited to those, and may include known circuits for carrying out the functions. Moreover, the communication unit may use one of wireless communication systems selected from, but not limited to, Bluetooth, Radio Frequency Identification, IrDA (Infrared Data Association), Ultra Wideband, ZigBee, and Wi-Fi.

The communication unit 80 may receive a signal from the processor 10 through the interface unit 30. If the communication unit 80 receives a control signal from the interface unit 30, the communication unit 80 may modulate the control signal and may transmit the signal modulated thus to the indoor unit 130 or the outdoor unit 120.

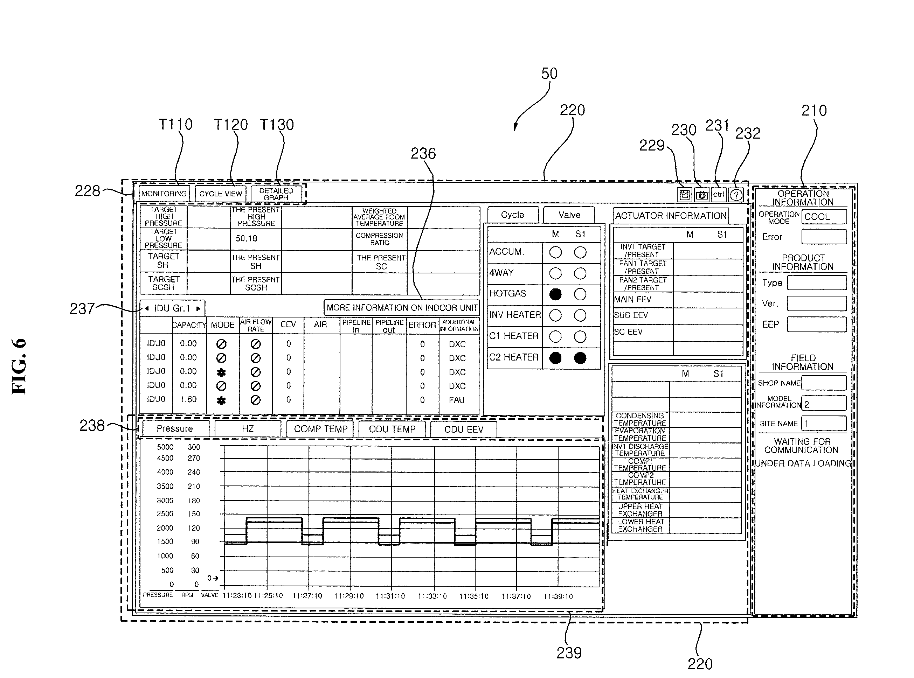

FIG. 6 is an exemplary view illustrating a frame for monitoring an air conditioner displayed on a control unit in accordance with a preferred embodiment of the present invention.

The control unit 150 receives information on equipped apparatuses including the outdoor unit and the indoor unit and forwards the information through the output unit 50.

In this case, referring to FIG. 6, the output unit 50 displays information on a plurality of the equipped apparatuses connected thereto including the outdoor unit and the indoor unit.

In this case, the control unit 150 sorts the cycle data according to kinds of data, kinds of the equipped apparatuses, data characteristics and so on, and divides a frame of the output unit 50 into a plurality of regions, for displaying the data sorted thus thereon, respectively.

For an example, the output unit 50 may display the information on the equipped apparatuses on the frame dividing the frame into a monitoring window 220 and an information display window 210.

In this case, besides the monitoring tap T110, the monitoring window 220 has an additional menu tap 228 for displaying a cycle view tap T120, and a detailed graph tap T130, and, if respective taps are selected, the cycle view window and the detailed graph window are displayed on the frame together with additional menus.

And, the monitoring window 220 has a plurality of function buttons displayed thereon. In this case, the function buttons may be a storage button 229, a still shot button 230, a control button 231, and a help button 232.

When the storage button 229 is selected, a plurality of data displayed by the present output unit 50 may be stored, together with time information.

The still shot button 230 stores data displayed on the monitoring window 220 and the information display window 210 presently the same as an appearance of the frame in a still shot image.

When the control button 231 is selected, a storage period of the data monitored thus, and a storage time period of the data in one time of storage may be set. In this case, selection of the button is not required additionally, but the data is stored, periodically. And, change of the language displayed on the monitoring window 220 and the information display window 210 is possible, frame setting may be corrected, and a size of the image stored when the still shot is selected may be set.

Moreover, when the control button 231 is selected, control setting for the equipped apparatuses is possible.

The monitoring window 220 may have individual information and group information on an apparatus of the plurality of equipped apparatuses displayed thereon, and information on a particular apparatus selected at the monitoring window 220 is displayed on the information display window 210.

As the monitoring window 220 has the equipped apparatuses sorted, and information on the equipped apparatuses sorted in a plurality of the taps, such that, if one of the taps is selected, information on the equipped apparatus is displayed on the frame.

In this case, the monitoring window 220 is divided into a plurality of regions for displaying data at the regions different from one another.

The monitoring window displays basic operation information, group and individual apparatus information of the equipped apparatuses, the cycle information, measured data values, and an operation graph window 239 of each apparatuses.

In the basic operation information, a control target value on a pressure or a temperature of, for an example, the air conditioner, and data being measured presently are displayed.

In the group and individual apparatus information, a group selection tap 237 is provided for enabling to select a group intended to display, and information on individual apparatus in the group is displayed in a list. In this case, if there are contents in an additional information item, the additional information tap 236 may display information on a special indoor unit on an additional window, additionally.

And, in the cycle and the measured data value, with regard to, whether each of functions of a master outdoor unit and slave outdoor units is operated or not is displayed, and measured values thereof are displayed. Besides, information on the fan and the valve, and information on a discharge temperature of the compressor, a condensing temperature and evaporation temperature of the heat exchangers is displayed.

For an example, the target pressure, the present pressure, a compression ratio, a room temperature, operation of each element, whether the valve of the outdoor unit 120 is in operation or not may be displayed, and a pressure of the outdoor unit 120 or the indoor unit 130, a temperature of the outdoor unit 120 or the indoor unit 130, a discharge pressure of the compressor, an EEV opening, and a fan speed are displayed.

In the operation graph window 239, the pressure of the compressor, an operation frequency, a compressor temperature, a temperature of the outdoor unit, operation of an outdoor unit valve are selected with respective selection taps 238, for displaying a graph on each of items on the apparatus selected thus.

In this case, the operation graph window 239 may display a plurality of pieces of information divided into colors different from one another, or thicknesses or line forms different from one another.

The information displayed on the operation graph window 239 may also be displayed when the detailed graph tap T130 is selected, but may be displayed in more detail.

In the information display window 210, if one of the apparatuses displayed in the group information is selected, an operation mode, whether an error takes place or not, a kind of the error, and product information on a product type or version of the apparatus are displayed, together with information on a position of the apparatus selected thus. And, in the information display window 210, a communication state with the apparatus selected thus may also be displayed.

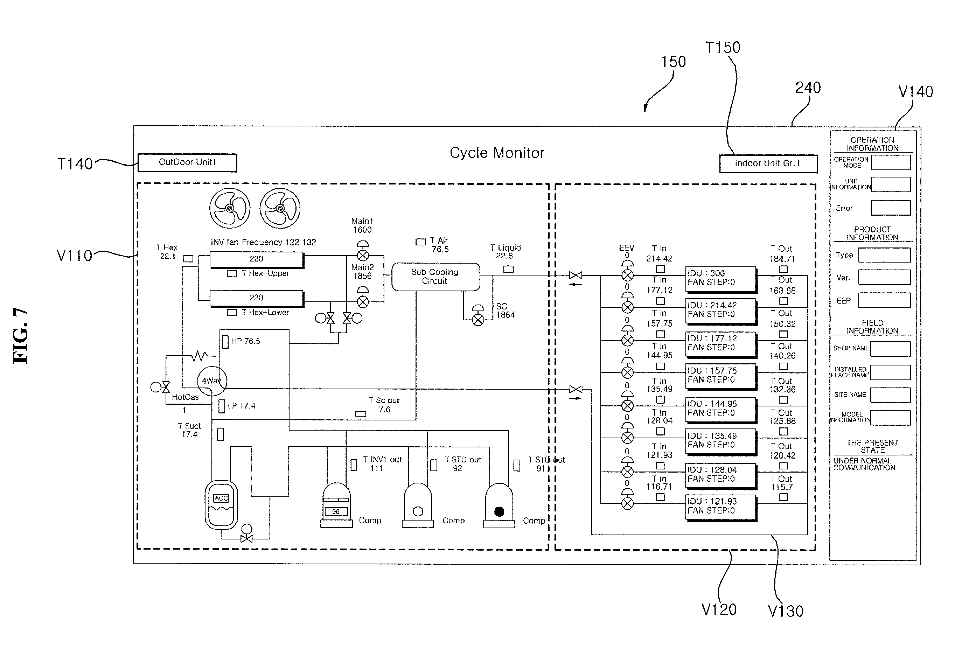

FIG. 7 is an exemplary view illustrating a frame for monitoring an air conditioner cycle displayed on a control unit in accordance with a preferred embodiment of the present invention.

Referring to FIG. 7, the processor 10 displays information on a cycle of the air conditioner on a screen of the output unit 50 in an image.

If the cycle view tap T120 is selected from the menu taps in FIG. 6 described before, the cycle information is displayed on a cycle view frame 240 displayed on the output unit 50.

The cycle view frame 240 has the apparatuses of the air conditioner arranged matched to actual connection states and installed positions thereon, for displaying the present operation states thereon.

In this case, each of the apparatuses is displayed in an image, an icon, or a symbol which represents the apparatus and the operation state of each of the apparatuses is displayed in a color, a moving image, a character, or a numeral.

And, the cycle view frame 240 displays cycle data changed in real time matched to the data on the operation state of the apparatus of the air conditioner.

For an example, an outdoor unit fan or an indoor unit fan is displayed in an image of a rotating fan, and, if the fan image does not move (Does not rotate), it may be determined that the fan is in a turned off state. And, the operation state of the compressor may be displayed in a color, for an example, in red and green.

The cycle view screen has an outdoor unit selection button T140 and an indoor unit selection button T150 for, if a particular outdoor unit is selected from the plurality of outdoor units of the air conditioner, displaying information on the outdoor unit selected thus, as well as the cycle view of apparatuses connected to the outdoor unit selected thus.

Moreover, the cycle view frame has an outdoor unit region V110 and an indoor unit region v120 displayed thereon divided the cycle view frame. In a case of the indoor units, information on a distributor connected to the indoor units is displayed altogether, and, in relation to this, a pipeline connection state V130 between the distributor and the indoor units is also displayed.

If one or a group of the indoor units is selected from the plurality of indoor units, the cycle information on the one or the group of the indoor units selected thus is displayed, together with information on the outdoor unit the one or the group of the indoor units selected thus is connected thereto.

In this case, since the control unit 150 is connected not to single outdoor unit, and single indoor unit, the control unit 150 displays cycle information on apparatuses or groups selected from the plurality of equipped apparatuses.

If a particular apparatus is selected from the cycle view frame 240, for an example, the compressor is selected, an operation information window V140 displays the operation information, product information, and information on installed site of the compressor.

And, if one of the apparatuses has something wrong, whether an error takes place or not may be displayed in a change of color or image, and a warning message may be displayed on the cycle view frame, additionally. And, the error information may also be displayed on the operation information window V140.

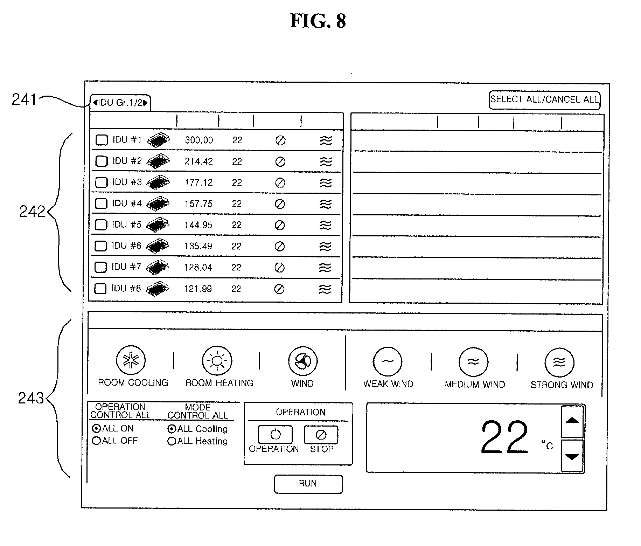

FIG. 8 is an exemplary diagram illustrating an indoor unit control frame displayed on a control unit in accordance with a preferred embodiment of the present invention.

Referring to FIG. 8, of the plurality of equipped apparatuses, the control unit 150 may change operation setting of, and control, a predetermined group of the equipped apparatuses or individual apparatus.

When a separate menu is selected, or a control button is selected from the monitoring window described before, the control unit 150 may change setting of a particular group of the plurality of equipped apparatuses or individual apparatus, and control operation thereof. And, if a particular apparatus is selected from the monitoring window, the control unit may display a separate control menu on the apparatus selected.

One of indoor unit groups may be selected from a plurality of indoor unit groups formed in the plurality of equipped apparatuses with an indoor unit group tap 241. In this case, besides general indoor units, the indoor unit group includes apparatuses, such as showcases, ventilation units, and heaters.

If one of the indoor units is selected, the indoor units included to the indoor unit group, and information thereon is displayed on an indoor unit list 242. A number assigned to each of the indoor units is displayed, and a kind of the indoor unit is displayed in an image. And, information on the present state, temperature, in operation or not, and wind speed is displayed in images, numerals, or symbols.

If one of the indoor units is selected, detailed information on the indoor unit selected thus is displayed at a lower portion 243, and setting on the indoor unit selected thus may be changed.

For an example, one of modes of room cooling, room heating, and wind may be selected, a flow rate may also be selected from weak wind, medium wind, and strong wind. And, operation, and stop may be set forcibly, and a desired temperature may be changed.

In this case, if entire operation control, or entire mode control is selected, an operation control on the indoor unit group selected thus, i.e., entire indoor units in the indoor unit list is carried out. In the entire operation control, operation on/off on the entire indoor units in the indoor unit group is possible, and the operation mode of the entire indoor units in the indoor unit group may be controlled at a time in one of room heating and room cooling with the entire mode control.

If setting on the indoor unit is finished, the control unit 150 transmits data on a changed setting to the indoor unit group selected thus, for controlling operation of the indoor units.

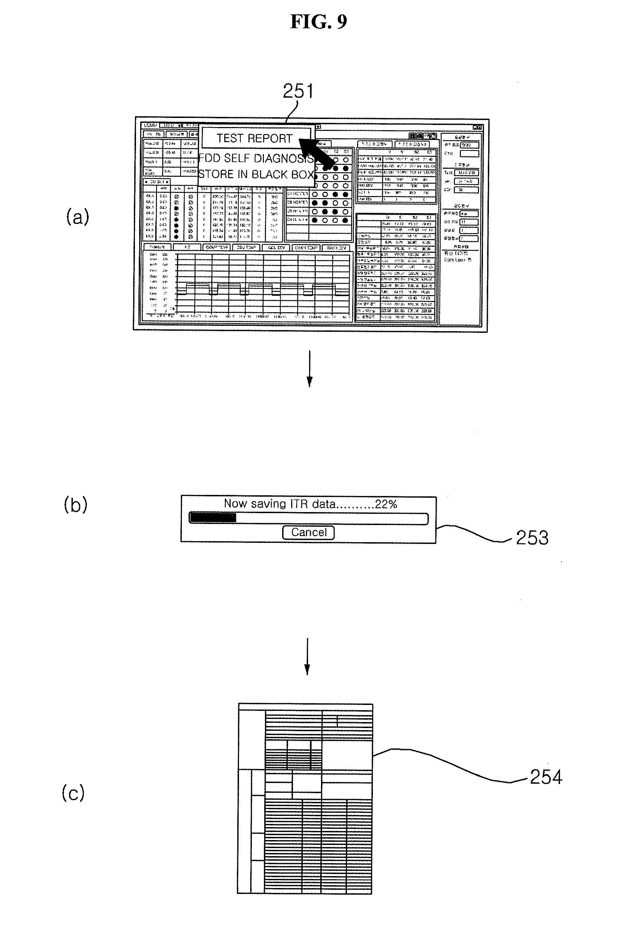

FIGS. 9A, 9B and 9C are exemplary diagrams illustrating frames of operation for a control unit in accordance with a preferred embodiment of the present invention, to generate a test report.

Referring to FIGS. 9A, 9B and 9C, the control unit 150 generates the test report based on information on the equipped apparatus displayed thereon.

By selecting a menu, the test report, FDD self diagnosis, or black box storage is possible 251. If the test report is selected, the test report is generated based on received information on the equipped apparatuses 253, when a progress state bar on the report generation is displayed on the frame.

Upon finishing the generation of the report, the test report is produced to the frame 254, and the test report generated thus may be transmitted to other control unit or an external apparatus.

And, at the time of generation of the test report, since path information is display on the test report altogether, the test report may be noticed if an access is made from an outside of the air conditioner system through the path.

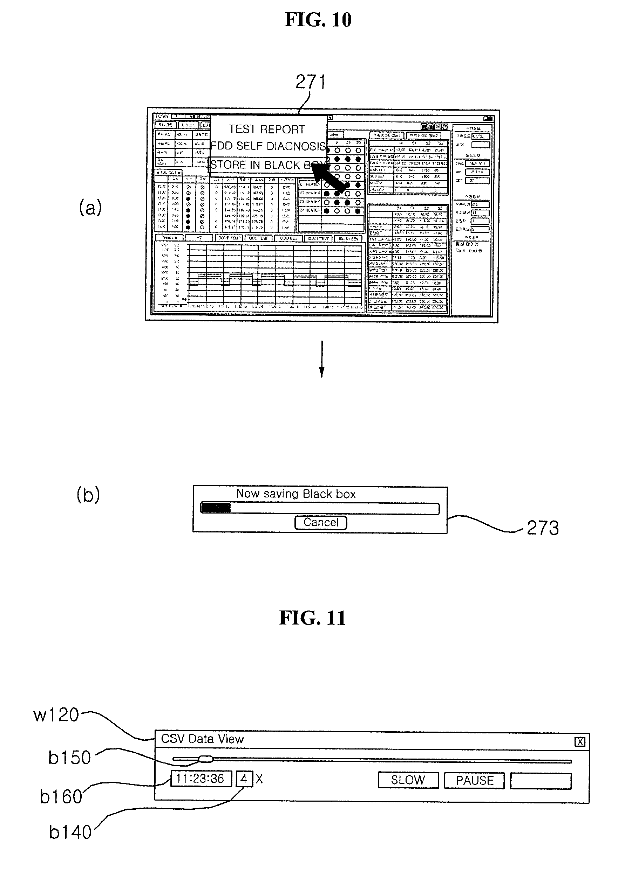

FIGS. 10A, and 10B are exemplary diagrams illustrating frames of operation for storing a data in a control unit in accordance with a preferred embodiment of the present invention.

Referring to FIGS. 10A, and 10B, the control unit 150 stores received information on the equipped apparatus thereto.

In this case, the control unit 150 may store periodic data for a predetermined time period, together with temporal information, such that, if the data stored thus is retrieved, data changed with time is displayed in succession. At the time of storage of the data, the control unit 150 stores the data regardless of the present language and units displayed, and, if it is intended to retrieve the stored data, the display is made possible, with the language, or the units to be displayed changed according to the setting.

At the time of storage of the data, the control unit 150 may select the data storing time and the data storing time period. Depending on a storage option, the data may be stored automatically without a storage button, and data are managed according to the time periods, separately.

In this case, besides general storage, the control unit 150 has a black box storage function. Upon selection of the black box function with selection of the menu 271, the processor 10 retrieves a black box data, and stores the black box data, separately 273.

The control unit 150 may request the outdoor unit 120 or the indoor unit 130 for a data generated just before an error takes place at the indoor unit 130 or the outdoor unit 120. The equipped apparatus, such as the outdoor unit or the indoor unit, stores the data for a predetermined time period, and especially, the equipped apparatus stores the data generated before a predetermined time period with reference to the time when the error takes place for transmitting to the control unit, separately.

FIG. 11 is an exemplary diagram illustrating a control unit in accordance with a preferred embodiment of the present invention, displaying a data.

As described before, the data stored at the control unit 150 may be retrieved by selecting a menu to display the data on the frame of the output unit 50.

Since the data are periodic data for the predetermined time period to include the temporal information, if the data stored thus is selected and retrieved, the data is displayed on the frame changed based on the temporal information included to the data.

For an example, in a case a data change for one minute is stored, if the data stored thus is read, the data change for one minute is displayed reproduced as it was.

In this case, as described before, the data may be displayed changing a rate of the display (w120).

The data, selected presently and being displayed again according to a time flow at the time of storage, may be displayed at a high or low rate, and the temporal information b160 on the data being displayed presently is displayed. In this case, the data being displayed may be moved to a particular time point with the state bar b150, instantly.

And, a reproduction rate b140 on the data stored thus is displayed. For an example, though a window b140 which shows the reproduction rate of the image shows the reproduction rate of the image in folded rate, in two fold, four fold, eight fold, or 16 fold, the present invention is not limited to this, but a variety of embodiments may be included.

Accordingly, the control unit 150 may display the changing data like the operation information of the equipped apparatuses are displayed in a video in a time series, allowing the user to notice the data change.

Although the air conditioning system according to the present invention has been described with reference to the illustrated drawings, it will be apparent to those skilled in the art that the present invention is not intended to be limited to the above-described embodiment and drawings, but various changes or modifications may be made therein without departing from the scope of the present invention.

## Claims

1. An air conditioning system comprising:
a plurality of equipped apparatuses (120, 130) connected to one another to form a network; and
a control apparatus (150) connected to one of the plurality of equipped apparatuses for monitoring and controlling the plurality of equipped apparatuses,
wherein the control apparatus is configured to receive a detailed cycle data which enables trouble diagnosis on the plurality of equipped apparatuses from the apparatus connected thereto thus in real time, and to display the cycle data on the plurality of equipped apparatuses on a frame in real time, and
wherein the control apparatus is further configured for carrying out control for determining whether the plurality of equipped apparatuses have something wrong taken place thereto and or not, and a position of the trouble, and for determining the trouble on the plurality of equipped apparatuses according to the cycle data changed.

2. The air conditioning system as claimed in claim 1, wherein the control apparatus (150) includes;
an input unit (60),
an output unit (50) for displaying the data,
a communication unit (80) connected to the equipped apparatuses for transmission/reception of the data to/from the equipped apparatuses,
a processor (10) for analyzing the data, computing raw data on the equipped apparatuses, or changing the raw data to a data the user may recognize, and forwarding to the output unit, and
a memory (20) for storing a setting data on the equipped apparatuses therein.

3. The air conditioning system as claimed in claim 1 or 2, wherein the control apparatus (150) is configured to store a career of the data changing with the flow of time at the time of storage of the data on the equipped apparatuses, and to, if the data stored thus is retrieved, display the data changed with the flow of time matched to the temporal information on the data stored thus.

4. The air conditioning system as claimed in any of claims 1 to 3, wherein the control apparatus (150) is configured for analyzing the data received from the equipped apparatuses to diagnose the trouble or a state of the equipped apparatus, and producing a warning to the frame if the trouble takes place.

5. The air conditioning system as claimed in claim 4, wherein the control apparatus (150) is configured to derive and display a help or a solution on the apparatus having something wrong taken place thereto based on the set data stored already.

6. The air conditioning system as claimed in claim 4 or 5, wherein, the control apparatus (150) is configured to, if the warning is displayed on the frame, carry out diagnosis on the apparatus having something wrong taken place thereto.

7. The air conditioning system as claimed in any of claims 1 to 6, wherein the control apparatus (150) is configured to control operation of the equipped apparatuses changing setting on the equipped apparatuses matched to the data being received, and to receive and display the cycle data changed by the operation control in real time.

8. The air conditioning system as claimed in claim 7, wherein the control apparatus (150) is configured to control at least one of the plurality of equipped apparatuses to stop or start operation, so as to search the plurality of equipped apparatuses for the apparatus having something wrong taken place thereto.

9. The air conditioning system as claimed in claim 7 or 8, wherein the control apparatus (150) is configured to determine whether the data being received has an error or not, and to disregard the data received if the data received thus has the error, producing a warning on the error received thus.

10. The air conditioning system as claimed in any of claims 1 to 9, wherein the control apparatus (150) is configured to sort the cycle data received from the equipped apparatuses according to one of kinds of data, kinds of the equipped apparatuses, and data characteristics, and to display the data sorted thus, respectively.

11. The air conditioning system as claimed in claim 9, wherein the control apparatus (150) is configured to divide the frame into a plurality of regions and to display the data sorted thus at the regions, respectively.

12. A method of operating an air conditioning system according to any of claims 1 to 11.
